# EUROPÄISCHE PATENTSCHRIFT

(11) **EP 2 369 964 B1**
(45) Veröffentlichungstag und Bekanntmachung des Hinweises auf die Patenterteilung: **03.04.2013**
(21) Anmeldenummer: 10805396.8
(22) Anmeldetag: 19.11.2010
(51) Int. Cl.: A47J 31/54

(54) **STRANGHEIZKÖRPER**
LINE HEATING ELEMENT
CORPS CHAUFFANT AGENCÉ EN LIGNE DE TUBES

(30) Priorität: 16.12.2009 DE 102009059162
(43) Veröffentlichungstag der Anmeldung: 05.10.2011
(73) Patentinhaber: Severin Elektrogeräte GmbH, 59846 Sundern (DE)
(72) Erfinder: VOIGT, Christian, 46509 Xanten (DE)
(74) Vertreter: Köchling, Conrad-Joachim
(86) Internationale Anmeldenummer: PCT/DE2010/001362
(87) Internationale Veröffentlichungsnummer: WO 2011/072632

(56) Entgegenhaltungen:
- EP-A1- 1 522 242
- DE-A1- 2 942 523
- DE-A1- 3 627 277
- DE-U1-202006 015 593
- US-A1- 2007 289 452

## Beschreibung

Die Erfindung betrifft einen Strangheizkörper für Getränkezubereitungsgeräte, bestehend aus einem Wasserführungsrohr und an diesem mittelbar oder unmittelbar befestigten elektrischen Heizkörpern, wobei das Wasserführungsrohr endseitig verjüngt ist und die Verjüngungszone einen Aufsteckbereich für einen Wasserführungsschlauch bildet.

Derartige Strangheizkörper sind zur Erhitzung von durchlaufendem Wasser bei Getränkezubereitungsgeräten bekannt. Üblicherweise ist der Strangheizkörper als Rohrkörper ausgebildet, wobei vorzugsweise beide Enden verjüngt sind. Diese Verjüngungszonen bilden Aufsteckbereiche für Wasserführungsschläuche, um einerseits Wasser von einem Wasserreservoir zum Strangheizkörper zu führen und andererseits das aufgeheizte Wasser vom Strangheizkörper zu der Brühkammer des Getränkezubereitungsgerätes zu führen. Zur Erhitzung des durchlaufenden Wassers ist es bekannt, an den Mantel des Wasserführungsrohres wärmeleitende Verbindungsstücke anzuschließen, die wiederum mit elektrischen Heizkörpern in wärmeleitender Verbindung stehen, so dass eine schnelle Aufheizung des durchlaufenden Wassers erreicht wird.

Zur Bildung des Aufsteckbereiches für einen Wasserführungsschlauch ist es bisher üblich, separate Formstücke zu fertigen, die an die Enden des zylindrischen Wasserführungsrohres angelötet oder angeschweißt werden. Es ist auch bekannt, solche Reduzierstücke mit Gewinde auszubilden, so dass sie an das Rohr angeschraubt werden können.

Eine solche Lösung, bei der die Formstücke an das Wasserrohr angelötet werden, ist beispielsweise aus der DE 29 42 523 A 1 bekannt. Diese zeigt ein Stranggussteil mit einer Längsbohrung, wobei in die offenen Enden der Längsbohrung separate Schlauchstutzen eingesetzt sind, die dort in geeigneter Weise gehalten sind, beispielsweise eingepresst sind.

Auch aus der US 2007/0289452 A 1 sind solche separaten Schlauchanschlusselemente bekannt, die mit dem Strangpresskörper verbunden werden müssen. Es ist zwar dort eine Verjüngungszone an dem entsprechenden Strangpresskörper ausgebildet, jedoch bilden diese nicht den Aufsteckbereich für einen Wasserführungsschlauch, sondern sie bilden einen Steckbereich für die separaten Elemente, die dort eingesteckt und verpresst werden. Auf diese Elemente wird dann der Wasserführungsschlauch aufgesteckt, so dass diese also den Aufsteckbereich dafür bilden.

Ähnliches offenbart die EP 1 522 242 A 1. Dort ist ein Wasserführungsrohr gezeigt und beschrieben sowie separate Anschlussstücke. Die Anschlussstücke werden in geeigneter Weise mit dem Wasserführungsrohr verbunden. Erst dann können die Wasserführungsschläuche auf die Anschlussstücke aufgesteckt werden.

Schließlich zeigt die DE 36 27 277 A 1 eine entsprechende Ausgestaltung mit einem Strangpresselement, welches Wasserführungsrohre bildet, wobei in die Mündungen dieser Bestandteile des Strangpresselement Schlauchanschlussteile eingesteckt und verpresst sind, auf die dann ein entsprechender Schlauch aufgesteckt werden kann.

Diese Lösungen sind sehr aufwändig und führen zu hohen Fertigungskosten. Darüber hinaus besteht die Gefahr von Undichtigkeiten, wenn die Verlötung oder Verschweißung fehlerhaft ist oder die Schraubverbindung nicht wasserdicht ist.

Ausgehend von diesem Stand der Technik liegt der Erfindung die Aufgabe zugrunde, einen Strangheizkörper gattungsgemäßer Art zu schaffen, der sehr kostengünstig zu fertigen ist und bei dem herstellungsbedingte Undichtigkeiten zwischen dem Wasserführungsrohr und der Verjüngungszone vermieden sind.

Zur Lösung dieser Aufgabe schlägt die Erfindung vor, dass die Verjüngungszone einstückig an das Wasserführungsrohr angeformt ist.

Dadurch dass die Verjüngungszone einstückig an das Wasserführungsrohr angeformt ist, kann die Fertigung vereinfacht werden, da in einem Fertigungsprozess lediglich die direkte Anformung der Verjüngungszone an das Wasserführungsrohr erforderlich ist, was in einem Schritt oder in mehreren Verformungsschritten erfolgen kann. Die separate Fertigung von solchen Anschlussstücken ist nicht mehr erforderlich. Auch die besondere Befestigung der Verjüngungszone an dem Wasserführungsrohr ist nicht mehr erforderlich, da diese beiden Teile einstückig ausgebildet sind. Fehler, die aus der Verbindung der Verjüngungszone mit dem Wasserführungsrohr resultieren könnten, sind vermieden.

Besonders bevorzugt ist vorgesehen, dass an das zylindrische Wasserführungsrohr zur Formung der Verjüngungszone eine konische Verjüngung angeformt ist, an die wiederum ein im Durchmesser gegenüber dem Wasserführungsrohr reduziertes Endstück angeformt ist, welches den Aufsteckbereich für den Wasserführungsschlauch bildet.

Hierdurch wird erreicht, dass das durch das Wasserführungsrohr strömende Wasser an den Enden, die die Verjüngungszonen aufweisen, nicht gehemmt wird, da ein glatter Übergang zwischen dem im Durchmesser großen Wasserführungsrohr und der konischen Verjüngung beziehungsweise in dem zylindrischen Endstück erreicht wird. Das zylindrische Endstück ist besonders gut zum Aufstecken eines Wasserführungsschlauches geeignet.

Um die Befestigung und Fixierung des Wasserführungsschlauchs zu verbessern ist vorgesehen, am reduzierten Endstück mündungsnah ein umlaufender, radial gegenüber dem Mantel des Endstücks vorragender Kragen angeformt ist. Hierbei ist bevorzugt vorgesehen, dass der Kragen zum freien Ende des Endstückes konisch verjüngt ist.

Durch diese konische Verjüngung ist das Aufschieben des Wasserführungsschlauches erleichtert.

Zudem ist bevorzugt vorgesehen, dass der Kragen an seinem der Mündung des Endstückes abgewandten Ende scharfkantig geformt ist.

Diese Ausbildung ermöglicht es, auf den aufgeschobenen Wasserführungsschlauch eine Schlauchschelle oder dergleichen aufzubringen und den Schlauch fest an dem reduzierten Endstück zu fixieren, wobei durch die scharfkantige Ausbildung des Kragens ein Hindernis gebildet ist, welches das ungewollte Abziehen des mit einer Schelle gehaltenen Schlauches vermeidet.

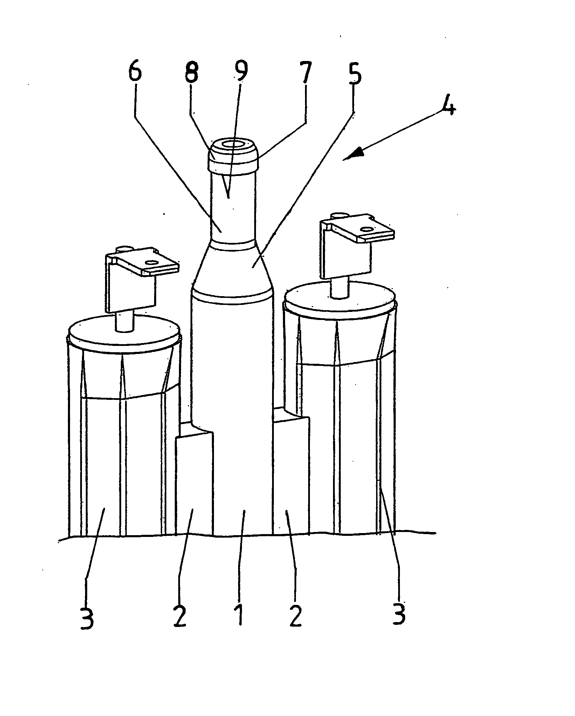

Ein Ausführungsbeispiel der Erfindung ist in der Zeichnung dargestellt und im Folgenden näher beschrieben.

Es zeigt:
Die einzige Zeichnungsfigur einen erfindungsgemäßen Strangheizkörper in Teilansicht.

In der Zeichnung ist ein Strangheizkörper für Getränkezubereitungsgeräte gezeigt. Er besteht aus einem Wasserführungsrohr 1 sowie an diesem mittelbar über wärmeleitende Zwischenstücke 2 befestigten elektrischen Heizkörpern 3. Das Wasserführungsrohr 1 ist endseitig verjüngt. Die Verjüngungszone 4 bildet einen Aufsteckbereich für einen Wasserführungsschlauch.

Erfindungsgemäß ist die Verjüngungszone 4 einstückig an das Wasserführungsrohr 1 angeformt. Hierzu ist vorzugsweise an das zylindrische Wasserführungsrohr 1 zur Formung der Verjüngungszone 4 eine konische Verjüngung 5 angeformt, an die wiederum ein im Durchmesser gegenüber dem Wasserführungsrohr 1 reduziertes, zylindrisches Endstück 6 angeformt ist, welches den Aufsteckbereich für den Wasserführungsschlauch bildet. Zusätzlich ist am reduzierten Endstück 6 mündungsnah ein umlaufender, radial gegenüber dem Mantel des Endstückes 6 vorragender Kragen 7 angeformt. Der Kragen 7 ist zum freien Ende des Endstückes 6 konisch verjüngt. Die konische Verjüngung ist mit 8 angegeben. Durch diese Maßnahme ist es erleichtert, den Wasserführungsschlauch aufzuschieben. Zusätzlich weist der Kragen 7 an seinem der Mündung des Endstückes 6 abgewandten Ende eine scharfkantige Ausformung 9 auf. Diese dient dazu, ein Hemmnis zu bilden, wenn der auf das Endstück 6 aufgeschobene Wasserführungsschlauch mit einer Klemmschelle befestigt wird, die sich dann im angezogenen Zustand an der scharfen Kante (bei 9) abstützen kann.

Die Erfindung stellt einen Strangheizkörper zur Verfügung, der kostengünstig und fehlerfrei gefertigt werden kann.

Die Erfindung ist nicht auf das Ausführungsbeispiel beschränkt, sondern im Rahmen der Offenbarung vielfach variabel.

## Patentansprüche

1. Strangheizkörper für Getränkezubereitungsgeräte, bestehend aus einem Wasserführungsrohr (1) und an diesem mittelbar oder unmittelbar befestigten elektrischen Heizkörpern (3), wobei das Wasserführungsrohr (1) endseitig verjüngt ist und die Verjüngungszone (4) einen Aufsteckbereich für einen Wasserführungsschlauch bildet, **dadurch gekennzeichnet, dass** die Verjüngungszone (4) einstückig an das Wasserführungsrohr (1) angeformt ist.

2. Strangheizkörper nach Anspruch 1, **dadurch gekennzeichnet, dass** an das zylindrische Wasserführungsrohr (1) zur Formung der Verjüngungszone (4) eine konische Verjüngung (5) angeformt ist, an die wiederum ein im Durchmesser gegenüber dem Wasserführungsrohr (1) reduziertes, zylindrisches Endstück (6) angeformt ist, welches den Aufsteckbereich für den Wasserführungsschlauch bildet.

3. Strangheizkörper nach Anspruch 2, **dadurch gekennzeichnet, dass** am reduzierten Endstück (6) mündungsnah ein umlaufender, radial gegenüber dem Mantel des Endstücks (6) vorragender Kragen (7) angeformt ist.

4. Strangheizkörper nach Anspruch 3, **dadurch gekennzeichnet, dass** der Kragen (7) zum freien Ende des Endstückes (6) konisch (8) verjüngt ist.

5. Strangheizkörper nach Anspruch 3, **dadurch gekennzeichnet, dass** der Kragen (7) an seinem der Mündung des Endstückes (6) abgewandten Ende scharfkantig (9) geformt ist.

## Claims

1. A line heating element for beverage-preparing devices, consisting of a water-conducting tube (1) and electric heating elements (3) directly or indirectly fixed thereto, the water-conducting tube (1) being tapered at the end, and the tapered zone (4) forming an insertion area for a water-conducting hose, **characterized by** that the tapered zone (4) is integrally molded on the water-conducting hose (1).

2. The line heating element according to claim 1, **characterized by** that a conical tapered portion (5) is integrally molded on the cylindrical water-conducting tube (1) for forming the tapered zone (4), on said conical tapered portion in turn a cylindrical end piece (6) having a reduced diameter compared to the water-conducting tube (1) is integrally molded that forms the insertion area for a water-conducting hose.

3. The line heating element according to claim 2, **characterized by** that a circumferential collar (7) radially protruding compared to the jacket of the end piece (6) is integrally molded at the reduced end piece (6) close to the orifice.

4. The line heating element according to claim 3, **characterized by** that the collar (7) is conically (8) tapered toward the free end of the end piece (6).

5. The line heating element according to claim 3, **characterized by** that the collar (7) has sharp edges (9) on its end pointing away from orifice of the end piece (6).

## Revendications

1. Corps chauffant agencé en ligne de tubes pour des appareils de préparation de boissons, comprenant un tuyau de guidage d'eau (1), et des corps chauffants électriques (3) fixés indirectement ou directement sur ce tube, le tuyau de guidage d'eau (1) étant aminci à son extrémité, et la zone amincie (4) formant une zone d'emboîtement pour un tuyau de guidage d'eau, **caractérisé en ce que** la zone amincie (4) est formée d'une seule pièce sur le tuyau de guidage d'eau (1).

2. Corps chauffant agencé en ligne de tubes selon la revendication 1, **caractérisé en ce qu'**une partie amincie conique (5) est formée d'une seule pièce sur le tuyau de guidage d'eau (1) cylindrique pour former la zone amincie (4), sur cette partie amincie conique à son tour une pièce d'extrémité cylindrique (6) ayant un diamètre réduit par rapport au tuyau de guidage d'eau (1) étant formée, qui forme la zone d'emboîtement pour le tuyau de guidage d'eau.

3. Corps chauffant agencé en ligne de tubes selon la revendication 2, **caractérisé en ce qu'**un collet périphérique (7) radialement en saillie par rapport à la gaine de la pièce d'extrémité (6) est formé d'une seule pièce sur la pièce d'extrémité (6) réduite proche de l'embouchure.

4. Corps chauffant agencé en ligne de tubes selon la revendication 3, **caractérisé en ce que** le collet (7) est aminci coniquement (8) vers l'extrémité libre de la pièce d'extrémité (6).

5. Corps chauffant agencé en ligne de tubes selon la revendication 3, **caractérisé en ce que** le collet (7) est à arêtes vives (9) sur son extrémité opposée à l'embouchure de la pièce d'extrémité (6).
